# EUROPEAN PATENT APPLICATION

(11) **EP 4 748 602 A1**
(43) Date of publication of application: **27.05.2026**
(21) Application number: 25217724.1
(22) Date of filing: 21.11.2025
(51) Int. Cl.: B60K 1/00, B60K 1/04, B62D 21/11, B62D 25/08

(54) **CRADLE FOR A DRIVE SYSTEM OF A VEHICLE**

(30) Priority: 22.11.2024 US 202463723606 P; 07.02.2025 US 202563755508 P; 19.11.2025 US 202519393710
(71) Applicant: Magna International Inc., Aurora, ON L4G 7K1 (CA)
(72) Inventor: Sederl, Gerald, 2731 Sankt Egyden (AT); Sauerzapf, Johannes, 2514 Traiskirchen (AT); Halbauer, Johannes, 2604 Theresienfeld (AT)
(74) Representative: Grünecker Patent- und Rechtsanwälte PartG mbB

(57) **Abstract**

A cradle for supporting a drive system of a vehicle includes at least one pair of side structures that extend generally in spaced and parallel relationship with one another. Each of the side structures extends between a front portion and a rear portion. At least one cross structure extends laterally between the rear portions of the side structures. At least one drive system coupler is connected to at least one of the structures for coupling the cradle to the drive system of the vehicle. At least one body coupler is connected to at least one of the structures for coupling the cradle to a body of the vehicle. A gap is defined between the front portions of the side structures such that no cross structure is located between the front portions of the side structures.

## Description

### CROSS-REFERENCE TO RELATED APPLICATIONS

This utility patent application claims priority to U.S. Utility Patent Application Serial No. 19/393,710, filed on November 19, 2025, U.S. provisional patent application serial number 63/723,606, filed on November 22, 2024, and U.S. provisional patent application serial number 63/755,508, filed on February 07, 2025, the entire disclosures of which are hereby incorporated by reference in their entireties.

### FIELD OF THE DISCLOSURE

The present disclosure relates to vehicles. More particularly, the present disclosure relates to a cradle for supporting a drive system of a vehicle.

### BACKGROUND

This section provides background information related to the present disclosure which is not necessarily prior art.

Electric vehicles (EVs), notably automobiles, represent a significant advancement in vehicle technology. EVs utilize an electric propulsion system in place of a traditional internal combustion engine. The electric propulsion system typically is comprised of one or more electric drive systems (EDS), comprised of an electric motor, gearbox, and associated components, which are powered by high capacity batteries. Typically, a frame serves as a structural background of the EV. A body is connected to the frame and encompasses both an outer shell and interior regions, including a passenger compartment and storage areas. The design of the frame is typically influenced by the placement and integration of large battery packs and EDS'. It is common for the frame to be comprised of a front cradle, a rear cradle, and a middle section that is located between and coupled to the front and rear cradles. The front and rear cradles are adapted to support the EDS', while the middle section is adapted to hold battery packs.

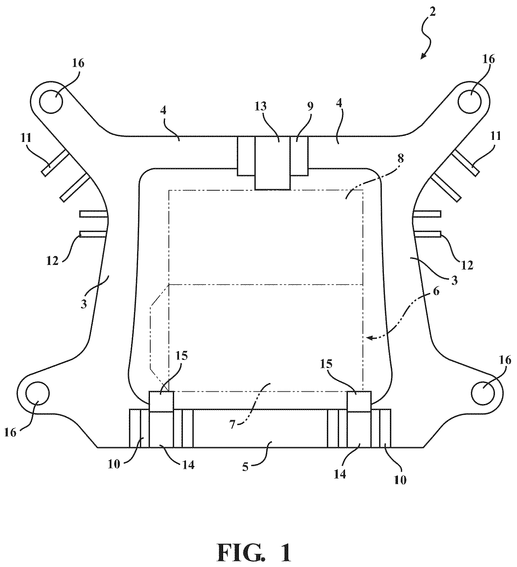

FIG. 1 is an example of a conventional rear cradle 2. The rear cradle 2 includes a pair of parallel side members 3. A front cross member 4 and a rear cross member 5 extend between the side members 3. An EDS 6, comprised of an electric motor 7, a gearbox 8 and associated components, is supported by the members 3, 4, 5. Due to space constraints, the gearbox 8 of the EDS 6 is typically positioned in a forward orientation, as illustrated in FIG. 1.

To connect the EDS 6 to the cradle 2 and to mitigate noise, vibration, and harshness (NVH), EDS bushings 13,14 are typically employed. These EDS bushings 13, 14 are mounted at connection points 9 and 10 on the cradle 2. Adapters 15 provide a connection between the EDS 6 and the EDS bushings 13, 14. Additionally, the cradle 2 features link arm connection points 11 and 12, which are used to mount link arms of the vehicle's wheel suspension system to the cradle 2. To further absorb NVH, the cradle 2 is connected to the vehicle body via bushings 16.

There remains a continued need for improvements to EV frames, notably to accommodate advances to both battery and EDS'.

### SUMMARY OF THE DISCLOSURE

A cradle for supporting a drive system of a vehicle including at least one pair of side structures in spaced relationship with one another and each extending between a front portion and a rear portion. At least one rear cross structure extends between the rear portions of the side structures. At least one drive system coupler is connected to at least one of the side and rear cross structures for coupling the cradle to the drive system of the vehicle. At least one body coupler is connected to at least one of the side and rear cross structures for coupling the cradle to a body of the vehicle. A gap is defined between the front portions of the side structures such that no cross structure is located between the front portions of the side structures.

A number of benefits are provided by the presence of the gap and absence of a front cross structure. The free space provided in the front region of the cradle by the gap provides space for the placement of other vehicle components, such as a large battery. The gap also reduces a footprint and weight of the cradle. Furthermore, the cradle is simple and inexpensive to fabricate in various ways and with various materials.

### BRIEF DESCRIPTION OF THE DRAWINGS

Other advantages of the present disclosure will be readily appreciated, as the same becomes better understood by reference to the following detailed description when considered in connection with the accompanying drawings wherein:
FIG. 1 is a top view of a conventional cradle for a vehicle, according to an aspect of the disclosure;
FIG. 2 is a top view of a first embodiment of a cradle, according to an aspect of the disclosure, which illustrates a drive system where an EDS is oriented such that a gearbox is in a rear area of the cradle and an electric motor is in a front area of the cradle;
FIG. 3 is a rear, perspective view of the first embodiment of the cradle;
FIG. 4 is a side view of the first embodiment of the cradle;
FIG. 5 is a front, perspective view of the first embodiment of the cradle;
FIG. 6 is a top view of a second embodiment of the cradle, according to another aspect of the disclosure;
FIG. 7 is a rear, perspective view of the second embodiment of the cradle;
FIG. 8 is a side view of the second embodiment of the cradle;
FIG. 9 is a top view of the second embodiment of the cradle, which illustrates a drive system where an EDS is oriented such that a gearbox is in a rear area of the cradle and an electric motor is in a front area of the cradle; and
FIG. 10 is a side, cross-sectional view of the second embodiment of the cradle.

### DESCRIPTION OF THE ENABLING EMBODIMENT

Example embodiments will now be described more fully with reference to the accompanying drawings. In general, the subject embodiments are directed to cradles for supporting drive systems of vehicles, however the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. It should be appreciated that the teachings of the present disclosure could be applied to various types of vehicles such as recreation vehicles.

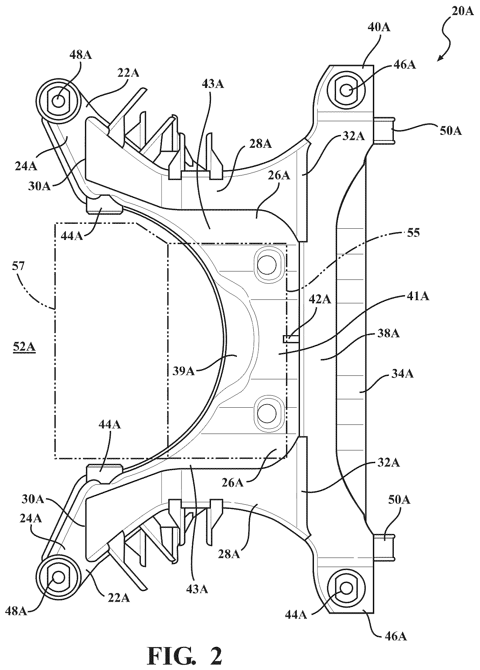

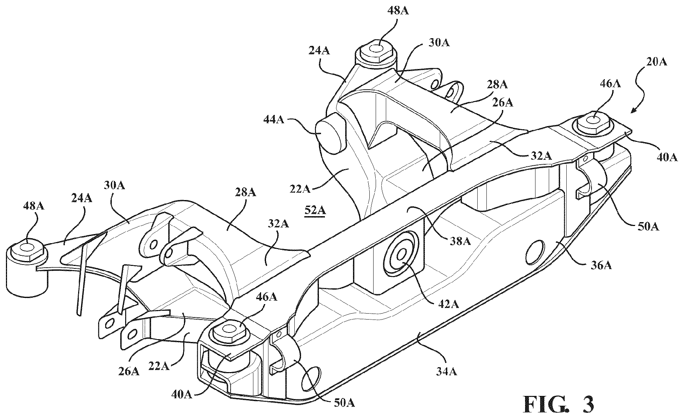

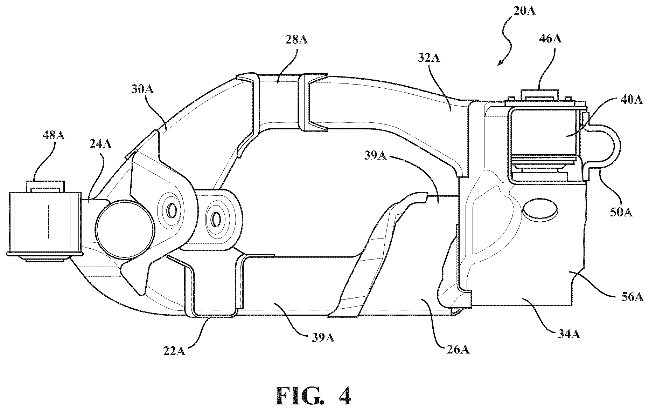

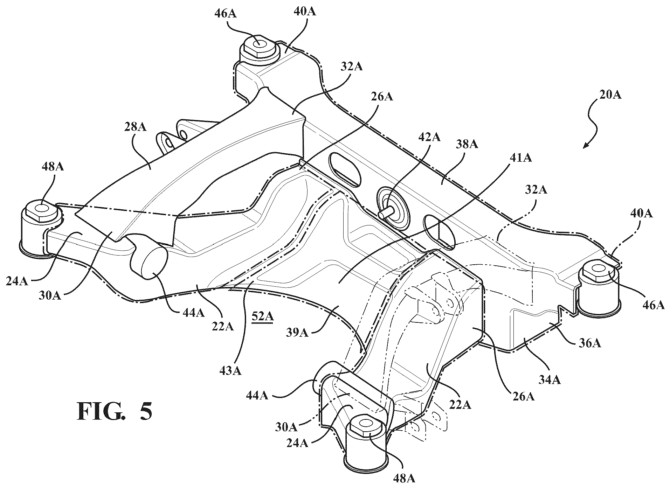

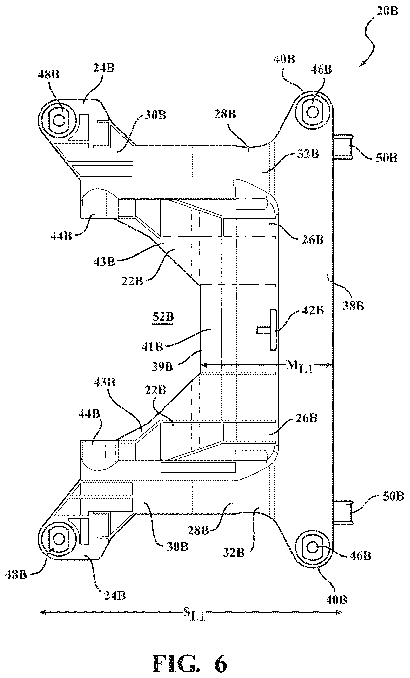

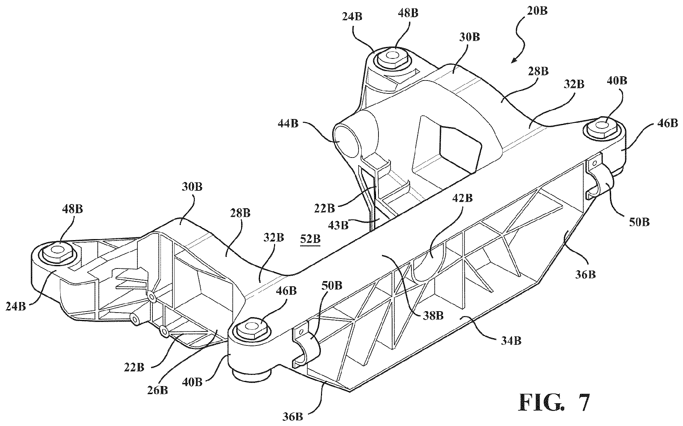

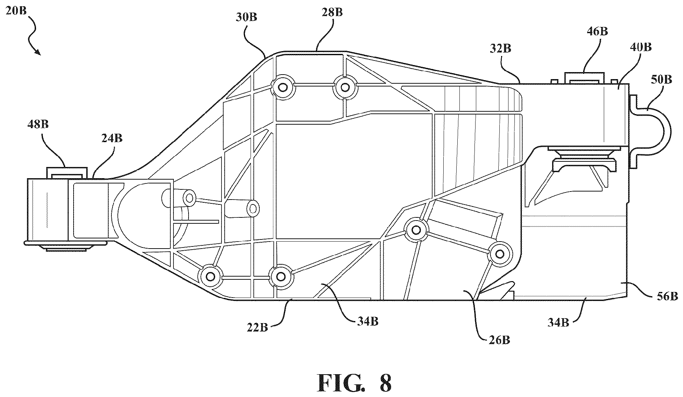

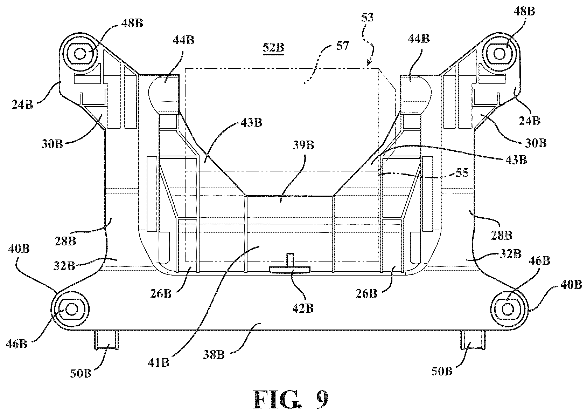

More particularly, referring to the figures, wherein like numerals indicate corresponding parts throughout the several views, embodiments of a rear cradle 20A, 20B for supporting a drive system for a vehicle are provided. The disclosed embodiments illustrate the cradle 20A, 20B used in conjunction with an electric drive system (EDS) 53 for an electric vehicle (EV), but the cradle 20A, 20B could be used to support other types of drive systems, such as an internal combustion engine (ICE) and/or associated components, or a hybrid system comprised of an ICE and electric motor. According to embodiments, and as shown in FIGS. 2 and 9, the EDS 53 is comprised of an electric motor 57, a gearbox 55, and associated components. The preferred embodiments show a rear cradle 20A, 20B, but the principles herein could also be applied to a front cradle. As will be discussed in greater detail below, the first embodiment of FIGS. 2-5 is directed to a rear cradle 20A that is made of a steel material, and the second embodiment of FIGS. 6-10 is directed to a rear cradle 20B that is made of an aluminum material.

In both embodiments, the rear cradle 20A, 20B includes a pair of lower side structures 22A, 22B (e.g., rails) that extend generally in spaced and parallel relationship with one another. Each of the lower side structures 22A, 22B extends between a front portion 24A, 24B and a rear portion 26A, 26B. A pair of upper side structures 28A, 28B (e.g., rails) are positioned above the lower side structures 22A, 22B and extend generally in spaced and parallel relationship with one another. Each of the upper side structures 28A, 28B extends between a frontward portion 30A, 30B and a rearward portion 32A, 32B. The upper side structures 28A, 28B are each coupled to one of the lower side structures 22A, 22B. The frontward portion 30A, 30B of each of the upper side structures 28A, 28B overlies the front portion 24A, 24B of the associated lower side structure 22A, 22B, and the rearward portion 32A, 32B of each of the upper side structures 28A, 28B overlies the rear portion 26A, 26B of the associated lower side structure 22A, 22B.

A lower rear cross structure 34A, 34B (e.g., rail) extends laterally between the rear portions 26A, 26B of the lower side structures 22A, 22B and is coupled to the lower side structures 22A, 22B at a pair of end portions 36A, 36B of the lower rear cross structure 34A, 34B. Similarly, an upper rear cross structure 38A, 38B (e.g., rail) extends laterally between the rearward portions 32A, 32B of the upper side structures 28A, 28B, and is coupled to the upper rear cross structure 38A, 38B at a pair of end segments 40A, 40B of the upper rear cross structure 38A, 38B.

Furthermore, a middle cross structure 39A, 39B (e.g., rail) extends laterally between a central portion of the lower side structures 22A, 22B and extends in a forward direction from the lower and/or upper rear cross structures 34A, 34B, 38A, 38B. As shown, the middle cross structure 39A, 39B may be integrally connected to, or otherwise coupled to (e.g., with bolts) the lower rear cross structure 34A, 34B and lower and/or upper rear cross structures 34A, 34B, 38A, 38B. The middle cross structure 39A, 39B may generally have a C-shape with a base 41A, 41B along the rear cross structure 34A, 34B, 38A, 38B and a pair of legs 43A, 43B extending in an arc shape away from a center of the base 41A, 41B to the front portions 24A, 24B, 30A, 30B of the side structures 22A, 22B, 28A, 28B. A gap 42A, 52B (discussed in further detailed below) is located between the base 41A, 41B, and legs 43A, 43B of the middle cross structure 39A, 39B. The presence of the middle cross structure 39A, 39B contributes to permitting the elimination of a front cross structure by providing structural reinforcement to the cradle 20A, 20B.

A rear coupler 42A, 42B, such as the shown EDS bushing 42A, 42B, is connected to the upper rear cross structure 38A, 38B for being coupled to an EDS 53 or other powertrain component of the vehicle. Thus, the rear coupler 42A, 42B serves as a drive system coupler. More particularly, the rear coupler 42A, 42B is configured to receive a connecting bolt of the EDS or other powertrain component and provides both a connection of the cradle 20A, 20B to the EDS as well as vibration dampening between the cradle 20A, 20B and the EDS. Other types of couplers may be used.

A pair of front couplers 44A, 44B, such as the shown EDS bushings 44A, 44B, each extend laterally through the front portion 24A, 24B of one of the lower side structures 22A, 22B for being coupled to the EDS 53 or other powertrain component of the vehicle. Thus, the front couplers 44A, 44B also serve as a drive system coupler. The EDS or other powertrain components may be connected to any combination of the rear and front couplers 42A, 42B, 44A, 44B. According to the preferred embodiments, the two front couplers 44A, 44B are aligned with one another, but could be arranged out of alignment with one another. Like the rear couplers 42A, 42B, the front couplers 44A, 44B provide both a connection of the cradle 20A, 20B to the EDS, as well as vibration dampening between the cradle 20A, 20B and the EDS. Again, other types of couplers may be used.

A pair of rear body couplers 46A, 46B, such as the shown bushings 46A, 46B, are each connected to the end portions 36A, 36B of the lower rear cross structure 34A, 34B and the end segments 40A, 40B of the upper rear cross structure 38A, 38 B. A pair of front body couplers 48A, 48B, such as the shown bushings 48A, 48B, are connected to the front portion 24A, 24B of each of the lower side structures 22A, 22B. The rear and front body couplers 46A, 46B, 48A, 48B provide both a connection of the cradle 20A, 20B to the body, e.g., a body in white, as well as vibration dampening between the rear cradle 20A, 20B and the body. Again, other types of couplers may be used.

A pair of anti roll bar (ARB) brackets 50A, 50B each extend rearwardly from the upper rear cross structure 38A, 38B adjacent to the end segments 40A, 40B for connecting to, and supporting an anti roll bar of the vehicle.

As shown, no front cross structure is located between the front portions 24A, 24B of the lower side structures 22A, 22B, or the frontward portions 30A, 30B of the upper side structures 28A, 28B. Instead, a gap 52A, 52B is defined between the front portions 24A, 24B and segments of the upper and lower side structures 28A, 28B, 22A, 22B. The front EDS bushings 44A, 44B face the gap 52A, 52B. As best shown in FIGS. 2 and 6, the absence of a front cross structure provides a bow shape of the cradle 20A, 20B. In order to provide a satisfactory stiffness of the cradle 20A, 20B without a front cross structure, the rear cross structures 34A, 34B, 38A, 38B have a larger cross section relative to conventional rear cross members.

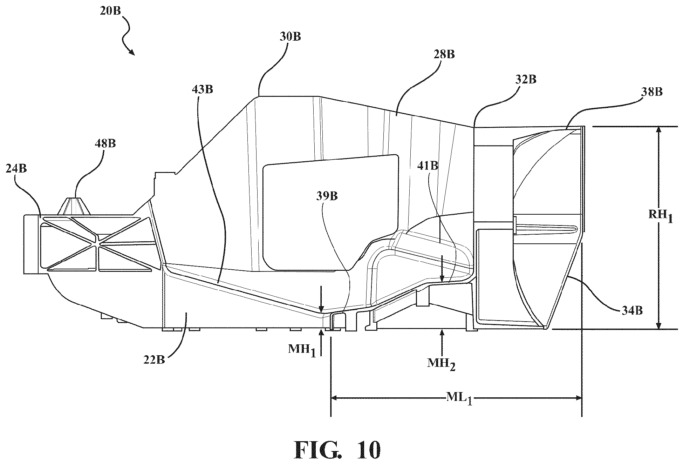

As best illustrated in FIGS. 6 and 10, the dimensions of the middle cross structure 39A, 39B, side structures 22A, 22B, 28A, 28B, and rear cross structure 34A, 34B, 38A, 38B may vary to optimize the size of the gap 52A 52B.

With specific reference to FIG. 10, a middle cross structure length ML1 between the back end of the lower and upper rear cross structures 34A, 34B, 38A, 38B and a frontmost point of the base 41A, 41B of the middle cross structure 39A, 39B can be set to a desired percentage of a rear cross structure height RH1 between a top of the upper rear cross structure 38A, 38B and the bottom of the lower rear cross structure 34A, 34B. According to an embodiment, the rear cross structure height RH1 may be 80% of the middle structure length ML1. In this case, the rear cross structure height RH1 may be 239 mm and the middle cross structure length ML1 may be 299 mm. According to another embodiment, this ratio may be in a range of 60% to 100%, and according to yet another embodiment, this ratio may be in a range of 70% to 90%.

With continued reference to FIG. 10, a middle cross structure height MH1, MH2 of the middle cross structure 39A, 39B may be set to a predetermined percentage of a rear cross structure height RH1. This may be taken at a middle cross structure minimum height MH1, which is the smallest height between a bottom and top of the middle cross structure 39A, 39B, or at a middle structure maximum height, MH2, which is the largest height between a bottom and top of the middle cross structure 39A, 39B. According to an embodiment, the middle cross structure height MH1, MH2 may be in a range of 3% and 44% of the of rear cross structure height RH1. According to this embodiment, the middle cross structure minimum height MH1 may be 18 mm, the middle cross structure maximum height MH2 may be 57 mm, and the rear cross structure height RH1 may be 239 mm. According to another embodiment, the middle cross structure height MH1, MH2 may be in a range of 5% and 34% of the of rear cross structure height RH1.

With reference to FIG. 6, the middle cross structure length ML1 may be set to a predetermined percentage of a side structure length SL1 which is a maximum length of the lower and upper side structures 22A, 22B, 28A, 28B. According to an embodiment, the middle cross structure length ML1 may be between 28% and 68% of the side structure length SL1. According to this embodiment, the middle cross structure length ML1 may be 299 mm and the side structure length SL1 may be 618 mm. According to anther embodiment, the middle cross structure length Ml1 may be in a range of 38% and 58% of the side structure length SL1.

A number of benefits are provided by the presence of the gap 52A, 52B and absence of a front cross structure. First, the free space provided in the front region of the cradle 20A, 20B by the gap 52A, 52B provides space for the placement of other vehicle components, such as a large battery, EDS or other powertrain component. Also, the smaller size of the cradle 20A, 20B provides the opportunity for the vehicle to use a bigger trunk, and also provides logistical advantages, such as smaller packaging for shipping the cradle 20A, 20B, and reduced weight. Due to the absence of a front cross structure the EDS 53, can be mounted from top and front direction onto the cradle 20A, 20B. Another benefit is an expanded crash length of the cradle 20A, 20B is provided during rear collisions. Also, the absence of a front structure provides an efficient architecture of the cradle 20A, 20B - for example, it permits a straight connection can be provided between the rear body bushing 46A, 46B and cradle 20A, 20B. As also shown in FIGS. 2-6, according to embodiments, the rear cross structures 38A, 38B and 34A, 34B may be straightened, which reduces a footprint of the cradle 20A, 20B. The overall bow-shape of the cradle 20A, 20B with the straight rear cross structures 38A, 38B and 34A, 34B provides satisfactory stiffness of the connection of the cradle 20A, 20B to the vehicle body via a simple packaging.

Furthermore, as illustrated in FIGS. 2 and 9, in the subject arrangement, the EDS 53 may be rotated to multiple configurations, which can provide space saving improvements and driving characteristic adjustments. FIGS. 2 and 9 shows the EDS 53 with the gearbox 55 in a rearward orientation, as compared to the EDS of FIG. 1, with a gear box 8 in a forward orientation.

The subject arrangements of the cradle 20A, 20B may be formed from aluminum high pressure die castings, like the embodiment shown in FIGS. 6-10. Low pressure die casting may also be used, with welded extrusions. According to other embodiments, welded aluminum sheets may be used. The single high pressure die cast arrangement provides advantages relative to welded arrangements, such as cost-reductions because fewer manufacturing processes are required, increased durability because damage typically begins at welds, and a lighter weight design. The subject arrangement may also be made with welded steel clamshell technology, like the embodiment shown in FIGS. 2-5.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in that particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or later, or intervening element or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to described various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in any embodiment, even if not specifically shown or described. The same may also be varied in many ways. Such variations are not to be regarded as a departure from the disclosure, and all such modifications are intended to be included within the scope of the disclosure.

## Claims

1. A cradle for supporting a drive system of a vehicle, comprising:
at least one pair of side structures in spaced relationship with one another and each extending between a front portion and a rear portion;
at least one rear cross structure extending between the rear portions of the side structures;
at least one drive system coupler connected to at least one of the side and rear cross structures for coupling the cradle to the drive system of the vehicle;
at least one body coupler connected to at least one of the side and rear cross structures for coupling the cradle to a body of the vehicle; and
a gap defined between the front portions of the side structures such that no cross structure is located between the front portions of the side structures.

2. The cradle as set forth in claim 1, further including a middle cross structure extending between the side structures adjacent to the rear cross-structure.

3. The cradle as set forth in claim 2, wherein the middle cross structure generally has a C-shape with a base located along the at least one rear cross structure and a pair of legs extending in an arc-shape away from a center portion of the base to the front portions of the side structures, and wherein the gap is located between the legs and the base of the middle cross structure.

4. The cradle as set forth in claim 3, wherein the side structures extend between the front and rear portions in a length direction, wherein a rear cross structure height spans between a top and bottom of the rear cross structure, wherein a middle cross structure length spans between a back end of the rear cross structure and a front of the center of the middle cross structure in the length direction, and wherein the rear cross structure height is in a range of 60% and 100% of the middle cross structure length.

5. The cradle as set forth in claim 3, wherein the side structures extend between the front and rear portions in a length direction, wherein a rear cross structure height spans between a top and bottom of the rear cross structure, wherein a middle cross structure length spans between a back end of the rear cross structure and a front of the center of the middle cross structure in the length direction, and wherein the rear cross structure height is in a range of 70% and 90% of the middle cross structure length.

6. The cradle as set forth in claim 3, wherein the side structures extend between the front and rear portions in a length direction to a maximum structure length, wherein a middle cross structure length spans between a back end of the rear cross structure and a front of the center of the middle cross structure in the length direction, and wherein the middle cross structure length is in the range of 28% and 68% of the side structure length.

7. The cradle as set forth in claim 3, wherein the side structures extend between the front and rear portions in a length direction to a maximum structure length, wherein a middle cross structure length spans between a back end of the rear cross structure and a front of the center of the middle cross structure in the length direction, and wherein the middle cross structure length is in the range of 38% and 58% of the side structure length.

8. The cradle as set forth in claim 3, wherein a middle cross structure height spans between a bottom and top of the middle cross structure, wherein a rear cross structure height spans between a bottom and top of the rear cross structure, and wherein the middle cross structure height is in a range of 3% and 44% of the rear cross structure height.

9. The cradle as set forth in claim 3, wherein a middle cross structure height spans between a bottom and top of the middle cross structure, wherein a rear cross structure height spans between a bottom and top of the rear cross structure, and wherein the middle cross structure height is in a range of 5% and 34% of the rear cross structure height.

10. The cradle as set forth in claim 1, wherein the side and rear cross structures are formed from aluminum high pressure die castings.

11. The cradle as set forth in claim 1, wherein the side and rear cross structures are formed from welded steel clamshells.

12. The cradle as set forth in claim 1, wherein each of the side structures of the pair of side structures includes a lower side structure and an upper side structure coupled to and positioned above the lower side structure.

13. The cradle as set forth in claim 12, wherein the at least one rear cross structure includes a lower rear cross structure extending between and coupled to the lower side structures, and an upper rear cross structure extending between and coupled to the upper side structures and located above the lower rear cross structure.

14. The cradle as set forth in claim 13, further including a middle cross structure extending between and connected to the lower side structures and the lower rear cross-structure, wherein the middle cross structure generally has a C-shape with a base located along the at least one lower rear cross structure and a pair of legs extending in an arc-shape away from a center portion of the base to the front portions of the lower side structures, and wherein the gap is located between the legs and the base of the middle cross structure.

15. The cradle as set forth in claim 1, wherein the side structures extend a length in a longitudinal direction between the front and rear portions of the side structures, wherein an electronic drive system is connected to the cradle and at least partially located in the gap, wherein the electronic drive system includes an electric motor and a gearbox, and wherein the gearbox is oriented toward the rear cross structure and the electric motor is oriented opposite the gearbox in the gap.
